# EUROPÄISCHE PATENTANMELDUNG

(11) **EP 4 602 917 A1**
(43) Veröffentlichungstag der Anmeldung: **20.08.2025**
(21) Anmeldenummer: 24157339.3
(22) Anmeldetag: 13.02.2024
(51) Int. Cl.: A01N 41/06, A01P 13/00

(54) **HERBIZIDE AUF BASIS SEKUNDÄRER PILZMETABOLITE**

(71) Anmelder: Leibniz-Institut Für Pflanzenbiochemie Stiftung Des Offentlichen Rechts, 06120 Halle (Saale) (DE); Martin-Luther-Universität Halle-Wittenberg, 06108 Halle (Saale) (DE)
(72) Erfinder: Arnold, Norbert, 06120 Halle (Saale) (DE); Schmitz, Lea, 06217 Merseburg (DE); Deising, Holger, 06118 Halle (Saale) OT Seeben (DE); Amorim, Renata, 81030-100 Curitiba (BR); Csuk, René, 06108 Halle (Saale) (DE); Denner, Toni Christopher, 06120 Halle (Saale) (DE)
(74) Vertreter: Müller-Boré & Partner Patentanwälte PartG mbB

(57) **Zusammenfassung**

Die vorliegende Erfindung betrifft die Verwendung einer Verbindung nach Formel (I) der vorliegenden Anmeldung oder eines Salzes davon als Herbizid, sowie entsprechende Verfahren zur Bekämpfung von Unkraut.

## Beschreibung

Die vorliegende Erfindung betrifft die Verwendung einer Verbindung nach Formel (I) der vorliegenden Anmeldung oder eines Salzes davon als Herbizid, sowie entsprechende Verfahren zur Bekämpfung von Unkraut.

Die Verwendung von sekundären Pilzmetaboliten aus nekrotisierenden pflanzenpathogenen Pilzen ist ein innovativer Ansatz zur Entwicklung neuer Herbizide mit neuer Wirkungsweise. Die enorme strukturelle Vielfalt der sekundären Stoffwechselprodukte von Pilzen und vor allem ihre hohe Wirksamkeit machen Phytotoxine nekrotisierender Pilze als neue Quelle für Herbizide attraktiv. Darüber hinaus können neue Pilzmetaboliten neuartige Wirkungsweisen haben, die von synthetischen Herbiziden nicht abgedeckt werden. Außerdem können die Pilzmetaboliten mehrere Ziele gleichzeitig ansprechen, was das Risiko einer Resistenzentwicklung verringert. Angesichts dieses reichhaltigen Reservoirs an mutmaßlichen Herbiziden ist es überraschend, dass bisher kein Produkt auf Basis von Molekülen aus Pilzen auf dem Markt ist.

Somit liegt der vorliegenden Erfindung die Aufgabe zugrunde, neuartige Herbizide, basierend auf sekundären Pilzmetaboliten aus nekrotisierenden pflanzenpathogenen Pilzen, bereitzustellen.

Diese Aufgabe wird durch die in den Ansprüchen gekennzeichneten Ausführungsformen gelöst. Insbesondere werden erfindungsgemäß die Verwendung einer Verbindung nach Formel (I) der vorliegenden Anmeldung als Herbizid, sowie entsprechende Verfahren zur Bekämpfung von Unkraut bereitgestellt.

Dementsprechend betrifft ein Gegenstand der vorliegenden Erfindung die Verwendung einer Verbindung nach Formel (I) oder eines Salzes davon als Herbizid: 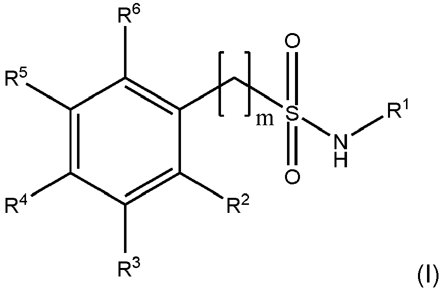 wobei
R¹ ausgewählt ist aus der Gruppe, bestehend aus
   (i) einem unsubstituierten oder substituierten (C₂-C₁₂)-Alkylalkohol,
   (ii) einem unsubstituierten oder substituierten (C₂-C₁₂)-Alkenylalkohol, und
   (iii) einem unsubstituierten oder substituierten (C₂-C₁₂)-Alkinylalkohol;
R², R³, R⁴, R⁵ und R⁶ jeweils unabhängig voneinander ausgewählt sind aus der Gruppe, bestehend aus Wasserstoff (H), Halogen (F, Cl, Br, I), Hydroxyl (OH), einem linearen oder verzweigten (C₁-C₆)-Alkyl, einem linearen oder verzweigten O-(C₁-C₆)-Alkyl, einem (C₃-C₆)-Cycloalkyl, und einem (Cs-Cs)-Cycloalkoxy; und
m 0, 1, 2, 3, 4, 5, 6, 7, 8, 9 oder 10 ist.

Der Begriff "Herbizid" wie hier verwendet bezeichnet Unkrautbekämpfungsmittel, also Substanzen, die unerwünschte Pflanzen abtöten. Dabei können die erfindungsgemäß verwendeten Verbindungen oder Salze davon bevorzugt als Totalherbizide, die gegen sehr viele Pflanzen wirksam sind, eingesetzt werden.

Die Gruppe R¹ in den erfindungsgemäßen Verbindungen nach Formel (I) oder Salzen davon ist ausgewählt aus der Gruppe, bestehend aus
(i) einem unsubstituierten oder substituierten (C₂-C₁₂)-Alkylalkohol,
(ii) einem unsubstituierten oder substituierten (C₂-C₁₂)-Alkenylalkohol, und
(iii) einem unsubstituierten oder substituierten (C₂-C₁₂)-Alkinylalkohol;
bevorzugt aus der Gruppe, bestehend aus
(i) einem unsubstituierten oder substituierten (C₂-C₈)-Alkylalkohol,
(ii) einem unsubstituierten oder substituierten (C₂-C₈)-Alkenylalkohol, und
(iii) einem unsubstituierten oder substituierten (C₂-C₈)-Alkinylalkohol.

In weiter bevorzugten Ausführungsformen ist die Gruppe R¹ ein unsubstituierter (C₂-C₈)-Alkylalkohol. In weiteren bevorzugten Ausführungsformen ist die Gruppe R¹ ein unsubstituierter oder substituierter (C₅-C₇)-Alkylalkohol, oder ein unsubstituierter oder substituierter (C₂-C₄)-Alkylalkohol.

Der Begriff "substituiert" wie hier verwendet umfasst einfach und mehrfach substituierte Gruppen und Verbindungen. Bevorzugte Substituenten sind dabei unabhängig ausgewählt aus der Gruppe, bestehend aus *tert*-Butyl, Hydroxyl, Isopropyl, Methyl, und Halogen (F, Cl, Br, I).

In bevorzugten Ausführungsformen sind die Gruppen R², R³, R⁴, R⁵ und R⁶ in den erfindungsgemäßen Verbindungen nach Formel (I) oder Salzen davon jeweils unabhängig voneinander ausgewählt aus der Gruppe, bestehend aus Wasserstoff (H), Halogen (F, Cl, Br, I), einem linearen oder verzweigten (C₁-C₄)-Alkyl, Hydroxyl (OH), einem linearen oder verzweigten O-(C₁-C₄)-Alkyl, einem (C₃-C₆)-Cycloalkyl, und einem (C₃-C₆)-Cycloalkoxy. In diesem Zusammenhang ist das lineare oder verzweigte (C₁-C₄)-Alkyl bevorzugt ausgewählt aus der Gruppe, bestehend aus Methyl, Ethyl, Propyl, Isopropyl, Butyl, Isobutyl, *sec*-Butyl und *tert*-Butyl, wobei *tert-*Butyl besonders bevorzugt ist. Weiter ist das lineare oder verzweigte O-(C₁-C₆)-Alkyl bevorzugt ausgewählt aus der Gruppe, bestehend aus Methoxy, Ethoxy, Propoxy, Isopropoxy, Butoxy, Isobutoxy, *sec*-Butoxy und *tert*-Butoxy. Das (C₃-C₆)-Cycloalkyl ist bevorzugt ausgewählt aus Cyclopropyl, Cyclobutyl, Cyclopentyl und Cyclohexyl, wobei Cyclohexyl besonders bevorzug ist. Schließlich ist das (C₃-C₆)-Cycloalkoxy bevorzugt ausgewählt aus Cyclopropoxy, Cyclobutoxy, Cyclopentoxy und Cyclohexoxy.

In einer bevorzugten Ausführungsform ist eine der Gruppen R², R³, R⁴, R⁵ und R⁶ in den erfindungsgemäßen Verbindungen nach Formel (I) oder Salzen davon *tert*-Butyl, und die übrigen der Gruppen R², R³, R⁴, R⁵ und R⁶ H. Dabei ist bevorzugt R⁴, R⁵ oder R⁶, mehr bevorzugt R⁴, *tert*-Butyl. Weiter ist bevorzugt (i) m 0, und/oder (ii) R¹ ein unsubstituierter (C₅-C₇)-Alkylalkohol.

In einer weiteren bevorzugten Ausführungsform ist eine der Gruppen R², R³, R⁴, R⁵ und R⁶ in den erfindungsgemäßen Verbindungen nach Formel (I) oder Salzen davon Cyclohexyl, und die übrigen der Gruppen R², R³, R⁴, R⁵ und R⁶ H. Dabei ist bevorzugt R⁴ Cyclohexyl. Weiter ist bevorzugt (i) m 0, und/oder (ii) R¹ ein unsubstituierter (C₂-C₄)-Alkylalkohol.

In weiteren bevorzugten Ausführungsformen sind die Gruppen R², R³, R⁴, R⁵ und R⁶ in den erfindungsgemäßen Verbindungen nach Formel (I) oder Salzen davon jeweils Wasserstoff (H).

Darüber hinaus ist in bevorzugten Ausführungsformen m in den erfindungsgemäßen Verbindungen nach Formel (I) oder Salzen davon 0.

In einer speziellen und bevorzugten Ausführungsform ist die erfindungsgemäß verwendete Verbindung nach Formel (I) 4-(*tert*-butyl)-N-(5-hydroxypentyl)benzolsulfonamid gemäß der nachstehenden Formel (2), oder ein Salz davon.

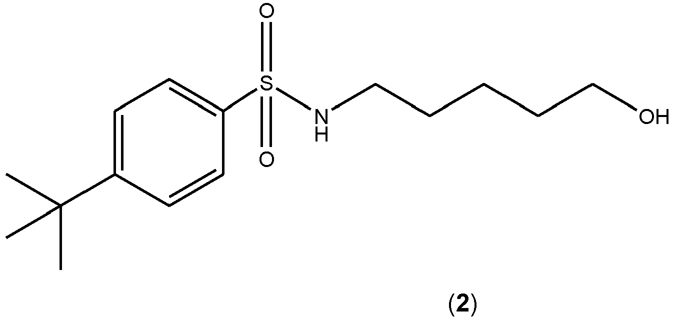

In einer weiteren speziellen und bevorzugten Ausführungsform ist die erfindungsgemäß verwendete Verbindung nach Formel (I) 3-(*tert*-butyl)-*N*-(5-hydroxypentyl)benzolsulfonamid gemäß der nachstehenden Formel (**10**), oder ein Salz davon.

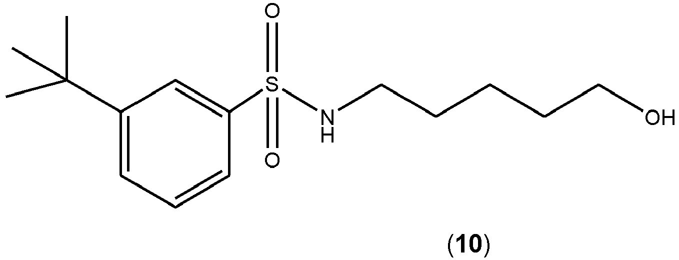

In einer weiteren speziellen und bevorzugten Ausführungsform ist die erfindungsgemäß verwendete Verbindung nach Formel (I) *N*-(4-Hydroxybutyl)-benzolsulfonamid gemäß der nachstehenden Formel (**1a**), oder ein Salz davon.

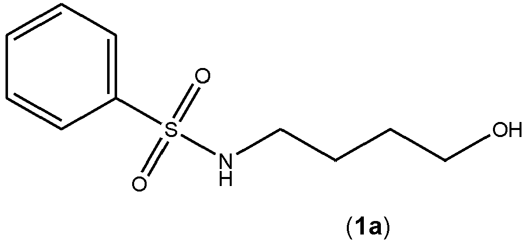

*N*-(4-Hydroxybutyl)-benzolsulfonamid wurde im Rahmen der vorliegenden Erfindung als Naturstoff **1** aus Flüssigkulturen von *Colletotrichum graminicola* (Teleomorph *Glomerella graminicola*) isoliert, der ein bedeutender phytopathogener Pilz aus der Gruppe der Ascomyceten und Verursacher der Anthraknose in Mais, aber auch in anderen Getreidearten und Gräsern, ist.

In weiteren speziellen Ausführungsformen ist die erfindungsgemäß verwendete Verbindung nach Formel (I) ausgewählt aus der Gruppe, bestehend aus 4-(*tert*-Butyl)-*N*-(2-hydroxyethyl)benzolsulfonamid (Verbindung (**3**)), 4-(*tert*-Butyl)-*N*-(3-hydroxypentyl)benzolsulfonamid (Verbindung (**4**)), 4-(*tert*-Butyl)-*N*-(4-hydroxybutyl)benzolsulfonamid (Verbindung (**5**)), *N*-(6-Hydroxyhexyl)-4-methylbenzolsulfonamid (Verbindung (**6**)), 3-(*tert*-Butyl)-*N*-(2-hydroxyethyl)benzolsulfonamid (Verbindung (**7**)), 3-(*tert*-Butyl)-*N*-(3-hydroxypropyl)benzolsulfonamid (Verbindung (**8**)), 3-(*tert*-Butyl)-*N*-(4-hydroxybutyl)benzolsulfonamid (Verbindung (**9**)), und 4-Cyclohexyl-N-(2-hydroxyethyl)benzensulfonamid (Verbindung (**11**)).

Gemäß der vorliegenden Erfindung können die Verbindungen nach Formel (I) auch als Salze vorliegen. Geeignete Salze bzw. Gegenionen unterliegen keinen besonderen Beschränkungen und umfassen beispielsweise Natrium-, Kalium-, Calcium- und Magnesiumsalze der jeweiligen Verbindungen.

Die erfindungsgemäß verwendeten Verbindungen nach Formel (I) oder Salze davon werden bevorzugt als Herbizid (oder Totalherbizid) zur Bekämpfung von Unkräutern aus der Klasse der *Angiospermae* (Bedecktsamer), mehr bevorzugt aus den *Dicotyledones* (Zweikeimblättler) oder *Monocotyledones* (Einkeimblättler), verwendet.

Ein weiterer Gegenstand der vorliegenden Erfindung betrifft ein Verfahren zur Bekämpfung eines Unkrauts oder mehrerer Unkräuter, umfassend das Aufbringen einer wirksamen Menge einer Verbindung nach Formel (I) oder eines Salzes davon, wir vorstehend für erfindungsgemäßen Verwendung definiert, auf eine Pflanze oder Teile einer Pflanze.

Der Begriff "Unkraut" wie hier verwendet bezeichnet jegliche unerwünschten Pflanzen der spontanen Begleitvegetation in Kulturpflanzenbeständen, Grünland oder Gartenanlagen, die dort nicht gezielt angebaut werden und aus dem Samenpotential des Bodens, über Wurzelausläufer oder über Zuflug der Samen zur Entwicklung kommen. Bevorzugt ist das erfindungsgemäß zu bekämpfende Unkraut eine oder mehrere Pflanzen aus der Klasse der *Angiospermae* (Bedecktsamer), mehr bevorzugt aus den *Dicotyledones* (Zweikeimblättler) oder *Monocotyledones* (Einkeimblättler). Dabei ist die Pflanze, auf die erfindungsgemäß eine wirksamen Menge einer Verbindung nach Formel (I) oder eines Salzes davon aufgebracht wird, das erfindungsgemäß zu bekämpfende Unkraut.

Das erfindungsgemäße Verfahren zur Bekämpfung eines Unkrauts oder mehrerer Unkräuter kann präventiv oder kurativ angewendet werden, die Verbindung nach Formel (I) oder das Salz davon also als Vorauflaufherbizid oder als Nachauflaufherbizid verwendet werden.

Verfahren zum Aufbringen einer wirksamen Menge einer Verbindung nach Formel (I) oder eines Salzes davon auf eine Pflanze oder Teile einer Pflanze unterliegen keinerlei besonderen Beschränkungen und sind im Stand der Technik bekannt. Diese umfassen beispielsweise das Besprühen, Benebeln, Bestreichen oder Eintauchen der Pflanze. Dabei kann die Verbindung nach Formel (I) oder das Salz davon beispielsweise als hydraulisches Spray hoher Flüssigkeitsmengen, als hydraulisches Spray niedriger Flüssigkeitsmengen, als Ultraniedrigvolumenspray, durch Hochdruckflüssigkeitsinjektion, durch Spaltinjektion, als Gebläseluftspray, als Luftspray, oder als Staub aufgebracht werden. Die Aufnahme der Verbindung nach Formel (I) oder des Salzes davon erfolgt dabei bevorzugt über die Blätter der Pflanze.

Bevorzugt liegt die in dem erfindungsgemäßen Verfahren verwendete Verbindung nach Formel (I) oder das Salz davon in einer Lösung, beispielsweise in wässriger Lösung und/oder in einem organischen Lösungsmittel, vor, wobei die Konzentration der Verbindung nach Formel (I) oder des Salzes davon in der Lösung im Bereich von 1 µM bis 10 mM, bevorzugt von 100 µM bis 5 mM, besonders bevorzugt bei etwa 2 mM, liegt. Dementsprechend ist die erfindungsgemäß aufgebrachte wirksame Menge der Verbindung nach Formel (I) oder des Salzes davon eine Menge, bei der die Verbindung nach Formel (I) oder das Salzes davon nach Aufbringen auf die Pflanze in den genannten Konzentrationen vorliegt.

In bevorzugten Ausführungsformen liegt die Verbindung nach Formel (I) oder das Salz davon in Form eines Trägerzusammensetzungsgemisches, also in einer Zusammensetzung, umfassend mindestens eine Trägersubstanz und die Verbindung nach Formel (I) oder das Salz davon, vor, wobei die Verbindung nach Formel (I) oder das Salz davon in einer Menge von 0,001 bis 99 Gew.-%, bevorzugt 0,001 bis 75 Gew.-%, bezogen auf das Gesamtgewicht des Trägerzusammensetzungsgemisches, vorliegt. Weiter können Trägerzusammensetzungsgemische für die direkte Anwendung oder Feldaufbringung die Verbindung nach Formel (I) oder das Salz davon in einer Menge zwischen 0,001 und 5 Gew.-%, vorzugsweise zwischen 0,01 und 3 Gew.-%, bezogen auf das Gesamtgewicht des Trägerzusammensetzungsgemisches, vorliegen.

Entsprechende Tägerzusammensetzungsgemische unterliegen keinerlei besonderen Beschränkungen und sind im Stand der Technik bekannt. Bevorzugt umfasst ein Trägerzusammensetzungsgemisch einen oder mehrere dispergierbare, inerte Träger.

Diese können einen oder mehrere dispergierbare, inerte Trägerfeststoff(e) und/oder eine oder mehrere dispergierbare, inerte Trägerflüssigkeit(en), beispielsweise ein inertes organisches Lösungsmittel und/oder Wasser, umfassen. In bestimmten Ausführungsformen umfasst das Trägerzusammensetzungsgemisch weiter einen oder mehrere oberflächenaktive(n) Trägermittelhilfsstoffe.

Der Begriff "etwa" wie hierin verwendet, stellt einen Modifikator des spezifizierten Werts von ± 10%, bevorzugt ± 9%, ± 8%, ± 7%, ± 6%, ± 5%, ± 4%, ± 3%, ± 2%, ± 1,5%, ± 1% oder ± 0,5% dar. Somit bezeichnet beispielsweise die Wendung "etwa 100" einen Wertebereich von 90 bis 110.

Die Figuren zeigen:
Figur 1:
   Wirksamkeitsprüfung mittels Blatt-Tropfen-Assay (Leaf-Spot Bioassay) nach 72 h Einwirkzeit. Naturstoff (**1**): Aus Flüssigkulturen von *Colletotrichum graminicola* isoliertes *N-*(4-Hydroxybutyl)-benzolsulfonamid; Verbindung (**2**): Synthetisch hergestelltes 4-(*tert*-butyl)-N-(5-hydroxypentyl)benzolsulfonamid.
Figur 2:
   Wirksamkeitsprüfung an *A. thaliana* (A) und *S*. *cereale* (B) mittels Blattscheiben-Assay (Verbindungen (**2**) und (**10**)).
Figur 3:
   Wirksamkeitsprüfung von Verbindung (**2**) mittels Ganzpflanzentest an *Nicotiana benthamiana* (Pflanzenalter 30 Tage).

Die vorliegende Erfindung wird anhand der folgenden, nicht-einschränkenden Beispiele näher erläutert.

### Beispiele

### Material und Methoden:

### Allgemeines.

Alle Reagenzien und Lösungsmittel waren analysenrein oder wurden mit Hilfe von Standardverfahren gereinigt. Reaktionen wurden mittels Dünnschichtchromatographie auf Kieselgel 60 F254 (Merck, 0,040-0,063 mm) verfolgt und mit UV-Licht (λ = 254 nm und λ = 366 nm) detektiert. Lösungen wurden bei verringertem Druck bei 40°C konzentriert.

### NMR.

Die NMR-Spektren wurden mit einem Agilent DD2 400 MHz NMR-Spektrometer aufgenommen. Als Lösungsmittel für die Proben wurde entweder deuteriertes Methanol (CDsOD) oder deuteriertes Dimethylsulfoxid (DMSO-d₆) mit 0,03% TMS als interner Standard verwendet.

Die UHPLC-HRESIMS-Spektren und die stoßinduzierten Dissoziationsmassenspektren (CID, collision induced dissociation) wurden im positiven Ionenmodus mit einem Orbitrap Q Exactive Plus (Thermofisher Scientific) Gerät aufgenommen. Die Probelösungen wurden vorher chromatographisch aufgetrennt (Säule: Thermo Scientific BEH C18 (Länge: 5 cm; Durchmesser: 2,1 mm; Porengröße: 130 Å Partikelgröße:1,7 µM; Säulentemperatur: 40 °C; Injektionsvolumen: 2 µL; Laufmittel: A: H₂O + 0,1 % Ameisensäure, B: Acetonitril + 0,1 % Ameisensäure; Flussrate: 0,3 ml/min; Gradient (A : B): 95 : 5 (0,5min) in 10 min nach 2 : 98 (5min)) und mittels Photodiodenarray-Detektor (PDA, Thermo Scientific) bei λ = 190-240 nm detektiert. Die Ionisierung erfolgte mittels Elektrosprayionisierung (HESI-Ionenquelle; Sprayspannung 4,0 kV; Vernebelungs- und Hilfsgas: Stickstoff; Verdampfungstemperatur: 250 °C; Kapillartemperatur: 275 °C, FTMS Auflösung Full MS 30000; MSⁿ 15000). Die CID-Massenspektren wurden mit normalisierten Kollisionsenergien (NCE) von 35 - 50 % aufgenommen. Das Massenspektrometer wurde extern kalibriert (Pierce^{®} LTQ Velos ESI positive ion calibration solution, Thermofisher Scientific). Als Alternative wurde ein Massenspektrometer Expression^{L} CMS (compact mass spectrometer, Firma Advion, Ithaca, USA) system verwendet, das mit einer ESI Ionenquelle (negativer und positiver Modus) oder einer APCI Ionenquelle (negativer und positiver Modus) ausgestattet war: Parameter: capillary temperature: 200/250 °C, source voltage offset: 15/20 V, source voltage dynamic: 10/20 V, source gas temperature: 200/350 °C, MS scan range *m*/*z* 100-600). Data acquisition und Verarbeitung erfolgten mit dem Programm Mass Express (Advion).

### IR-Spektren.

IR-Spektren wurden mit einem Spectrum 1000 FT-IR-Spektrometer von Perkin Elmer (Rodgau, Deutschland) aufgenommen. Die UV/Vis-Spektren wurden mit einem Lambda 14-Spektrometer von Perkin Elmer (Rodgau, Deutschland) aufgenommen. Die Schmelzpunkte (m.p.) wurden mit dem Leica-Heißtischmikroskop Galen III (Leica Biosystems, Nussloch, Deutschland) bestimmt und sind unkorrigiert. Die Mikroanalysen wurden mit einem Elementar Vario EL (CHNS) Gerät durchgeführt (Elementar Analysensysteme GmbH, Elementar-Straße 1, D-63505, Langenselbold, Deutschland).

### Säulenchromatographie.

Säulenchromatographische Trennungen wurden an Kieselgel 60 (Merck, 0,063-0,200 mm), Kieselgel 60 silanisiert (0.063 - 0.200 mm, Merck, Germany) und Polyamid-SC 6-Ac (Macherey-Nagel, Germany) durchgeführt.

### Kulturbedingungen.

*Colletotrichum graminicola* (Stamm M1.001) wurde im Emersverfahren mit Watte und dem Flüssigmedium CM (Complete Medium) bestehend aus: 10 g Glukose, 1 g Ca(NO₃)₂, 1 g Hefe-Extrakt, 1 g Caseinhydrolysat, 0,2 g KH₂PO₄, 0,25 g MgSO₄, 0,05 g NaCl ad 1 L *aqua* dest., kultiviert. Hierzu wurden 100 Erlenmeyerkolben (1 L) mit je 4 g Watte und 200 ml CM Medium befüllt. Der Wattebausch wurde mit 1 cm² großen Myzelstückchen beimpft und 13 Tage lang bei 23 °C im Dunkeln ohne Bewegung bebrütet.

### Reagenzien und Lösungsmittel.

4-Hydroxybutylamin, Dichlormethan, Triethylamin, Benzolsulfonylchlorid, Ameisensäure, *n*-Hexan, Acetonitril und Methanol wurden von herkömmlichen Laborausstattern erworben.

### HPLC.

Die analytische HPLC Trennung erfolgte an einer HPLC-Anlage (Shimadzu Prominenz-System, bestehend aus einem CBM 20A Kommunikationsbusmodul, einem SPD M20A Diodenarray-Detektor, einer DGU 20A5R Entgasungseinheit, einem LC 20AT Flüssigchromatographen und einem SIL 20A HT Auto Sampler) mittels einer analytischen HPLC-Säule (YMC ODS-A HPLC-Säule, Länge: 150 mm, Durchmesser: 4.6 mm, Porengröße: 120 Å, Partikelgröße: 5 µM). Als Gradientensystem wurde ein Lösemittelsystem verwendet, bestehend aus Laufmittel A: Wasser und B: Methanol; Flussrate: 0,8 ml/min; Gradient: (A : B): 95 : 5 (2 min) in 20 min nach 0 : 100 (5 min).

### Beispiel 1:

### Wirksamkeitsprüfung - Blatt-Tropfen-Assay (Leaf-Spot Bioassay)

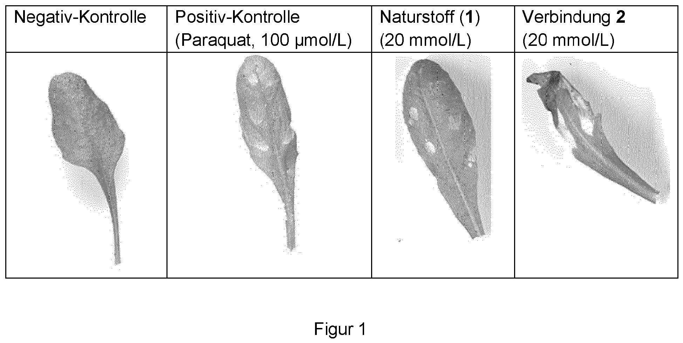

Die Testung der Einzelsubstanzen auf ihre herbizide Aktivität erfolgte in einem modifizierten Blatt-Tropfen-Assay (Evidente 1995) an *Arabidopsis thaliana* Col-0. Aliquoten der zu testenden Substanzen wurden in Methanol/Wasser 2:3 (v/v) gelöst. Die Substanzen wurden in Konzentrationen von 5 mmol/L bis 25 mmol/L getestet. Pro Blatt wurden mehrere Spots (in Abhängigkeit der Blattgröße) von je 5 µL aufgetragen. Die Pflanzen wurden für 72 h im Gewächshaus (19° C, Tag-/Nachtwechsel) inkubiert. Als Positiv-Kontrolle diente Paraquat (100 µmol/L, Lösemittel Methanol : Wasser, 1:1, v/v), als Negativ-Kontrolle das Lösemittel Methanol : Wasser (1:1 bzw. 2:3, v/v). Nach 72 h wurde der Grad der Nekrosenbildung bestimmt. Die Auswertung erfolgte photographisch nach Phänotyp (Fig. 1).

### Beispiel 2: Wirksamkeitsprüfung - Blattscheiben-Assay (Non-Destructive-Leaf-Disc Bioassay)

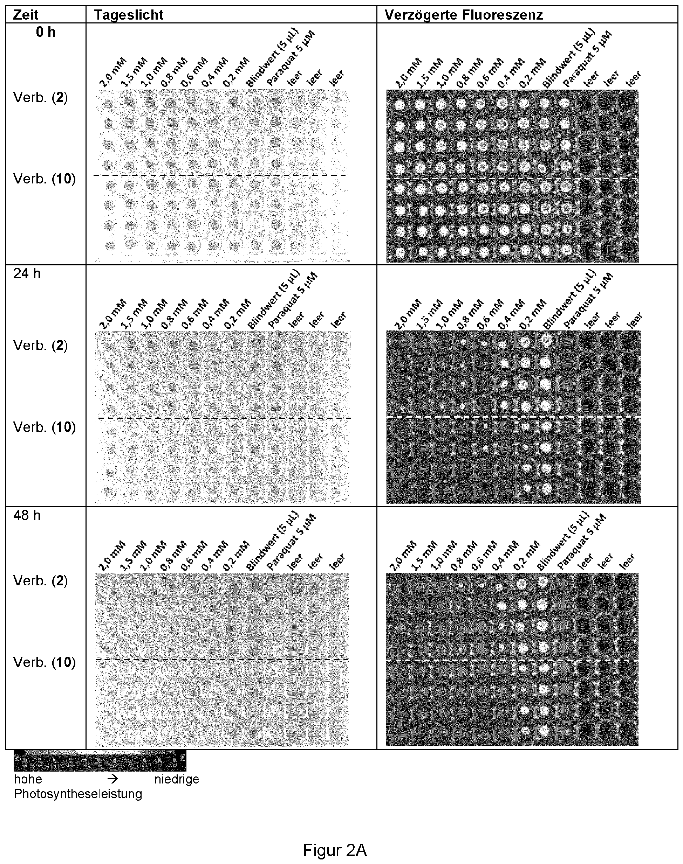

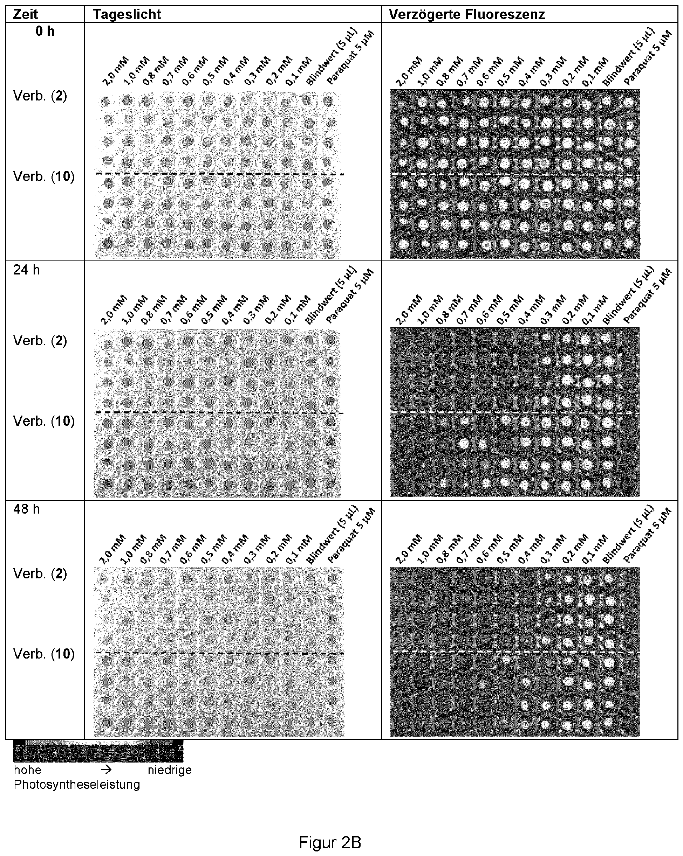

Der Blattscheiben-Assay (Non-Destructive-Leaf-Disc Bioassay) mit Messung der verzögerten Fluoreszenz (delayed fluorescence) wurde wie im Stand der Technik bekannt durchgeführt. Die Testung der Substanzen erfolgte in 4 biologischen Replikaten. Als Testpflanzen wurden *Arabidopsis thaliana* Col-0 und *Secale cereale* verwendet. Die Testung erfolgte in einer 96-Loch-Plate mit einem Volumen von 200 µL pro Loch. Von den Substanzen (Verbindungen (**2**) und (**10**)) wurden methanolische Stammlösungen (100 und 200 mmol/L) erstellt. Diese Stammlösungen wurden in Blattscheiben-Assay-Puffer für die gewünschten Dosen (0,1 - 5 mmol/L) verdünnt. Die getestete Konzentration ist bei der jeweiligen Verbindung angegeben (Fig. 2). Die Endkonzentration von Methanol in 200 µl Testansatz pro Loch betrug maximal 2,5 %. Der Blattscheiben-Assay-Puffer (pH 6,5) setzte sich zusammen aus 19,52 mg (1,0 mmol/L) 2-Morpholino-ethansulfonsäure und 1 g (2,9 mmol/L) Saccharose in 100 ml dest. Wasser. Die Blattscheiben wurden von entfalteten grünen Blättern ausgeschnitten (Stanze mit Stößel, 5 mm Durchmesser) und für den Blattscheibentest verwendet. Mittels Stößel-Abwurf wurden die einzelnen Blattscheiben vorsichtig auf der Oberfläche der Puffer- oder Testlösung (mit der adaxialen Oberfläche nach oben) platziert. Anschließend wurde die 96-Loch-Platte im Gewächshaus für 72 h inkubiert (19° C, Tag-/Nachtwechsel). Vor der Datenerfassung wurden die Platten in Aluminiumfolie eingewickelt und für 20 min an die Dunkelheit angepasst.

Für die Messung der verzögerten Fluoreszenz nach 0 h, 24 h und 48 h wurde das Fluoreszenz-Imaging-Gerät Nightshade LB 985 von Berthold Technologies (Software: IndiGo, Version 2.0.1.00) verwendet. Figur 2A zeigt das Ergebnis für *Arabidopsis thaliana* Col-0, Figur 2B das Ergebnis für *Secale cereale.* Zudem wurde das Erscheinungsbild der Blattscheiben im Tageslicht nach 0 h, 24 h und 48 h erfasst. Die Proben wurden für 10 Minuten durch Halogenleuchten bestrahlt. Nach zehn Minuten wurde das Licht für 3 s ausgeschaltet, bevor die Messung der Verzögerten-Fluoreszenz startete. Die Kamera (Peltier/air-cooled slow-scan-CCD Kamera, Auflösung: 1024 x 1024 Pixel) wurde im high-scan-Modus mit niedriger Verstärkung und einem Binning von 2x2 (x-Binning: 2, y-Binning: 2) eingestellt. Die Hintergrund-Korrektur und kosmische Unterdrückung wurden aktiviert. Die verzögerte Fluoreszenz wurde für 60 s gemessen. Die Aufnahme des Fotos erfolgte mit einer Beleuchtungsintensität von 10 %. Die Probe wurde für das Foto für 0,1 s belichtet. Die Probengröße entsprach den Maßen der 96-Loch-Platte (b = 130 mm, h = 15 mm). Die verzögerte Fluoreszenz ist im Stand der Technik als Indikator für Pflanzenstress induziert durch verschiedenste Umwelteinflüsse, darunter auch Herbizide, beschrieben.

Im Blattscheiben-Assay korreliert die Farbgebung der Blattscheiben mit der Intensität der gemessenen verzögerten Fluoreszenz. Eine hohe Intensität ist dargestellt durch eine rote bis gelb-grüne Färbung, während eine schwache Intensität durch eine blaue Färbung dargestellt ist. Ist keine verzögerte Fluoreszenz messbar, so ist lediglich eine grau-schwarze Blattscheibe zu erkennen. Dies bedeutet, dass die Pflanze keine Photosynthese-Aktivität mehr aufweist und damit tot ist. Am Tageslichtbild ist die Wirkung durch eine Farbveränderung der Blattscheibe von grün nach cremeweiß erkennbar.

### Beispiel 3:

### Ganzpflanzentest

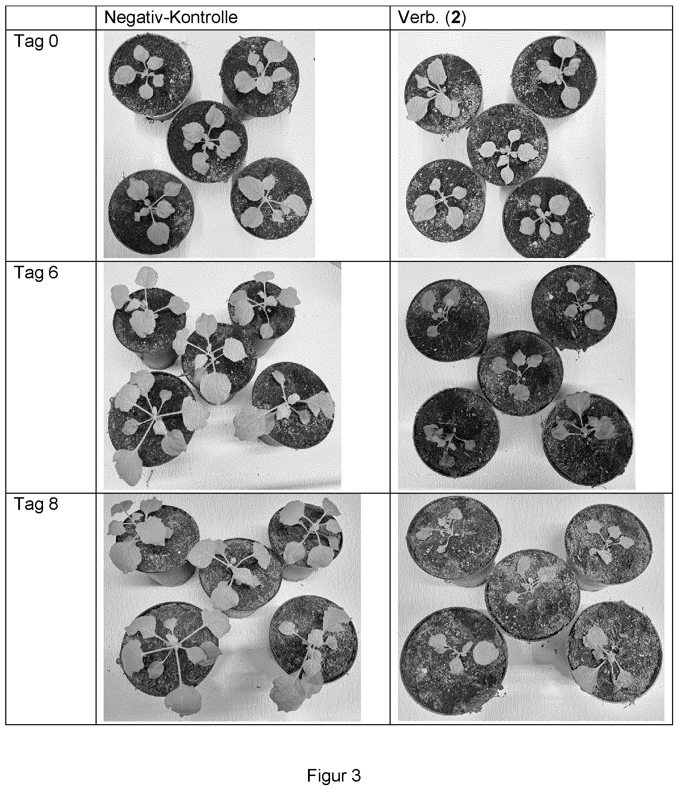

Die Testung der Wirksubstanzen an der Gesamtpflanze erfolgte mittels eines Sprühtests an *Nicotiana benthamiana.* Hierzu wurden 30 ml einer wässrigen Lösung mit pH= 8,5 (NaOH) der Wirksubstanz (Verbindung (**2**), 1,9 mmol) unter Zusatz von 1-Propanol (20 ml) und den Additiven Silwet Gold (38 µl) und Hasten 125 µl) hergestellt. In kurzen Sprühstößen wurden 0,5 ml der Wirklösung auf die Testpflanze aufgebracht. Figur 3 zeigt das Ergebnis nach 6 und 8 Tagen. Als Negativ-Kontrolle diente das Lösungsmittel ohne Verbindung (**2**).

### Beispiel 4:

### Isolierung des Naturstoffes 1

Die Isolierung des Naturstoffes (**1**) erfolgt aktivitätsgeleitet unter Verwendung des Blatt-Tropfen-Assays. Das Kulturfiltrat aus 100 Standkolben wird von den mit Myzel bewachsenen Wattebäuschen abgetrennt und sukzessive gegen Essigsäureethylester ausgeschüttelt. Das Myzel wird 15 Minuten mit Essigsäureethylester (6 x 3 L) im Ultraschallbad extrahiert. Die beiden organischen Phasen aus Filtrat- und Myzelextraktion werden vereinigt, mit Natriumsulfat (wasserfrei) getrocknet und unter vermindertem Druck zur Trockene am Rotationsverdampfer eingeengt (23 g). Der erhaltene Extrakt wird in Acetonitril gelöst und gegen *n*-Hexan verteilt. Die Acetonitrilphase wird abgetrennt und unter vermindertem Druck zur Trockene eingeengt (2,56 g). Der Acetonitrilextrakt wird an Polyamid-SC-6-Ac mittels eines Stufengradienten (*n*-Hexan, Essigsäureethylester, Aceton, Methanol) aufgetrennt. Die Essigsäureethylester-Fraktion enthaltend **1** wird aufgefangen, das Lösemittel unter vermindertem Druck entfernt und anschließend an silanisiertem Kiesel mittels eines Stufengradienten Chloroform : Methanol (100 :1 nach Chloroform : Methanol 1:1, v/v) weiter aufgereinigt. Die finale Isolierung von **1** gelingt mittels analytischer HPLC (t_{R} = 17,3 min; 0,5 mg).

### Spektroskopische Daten (1):

Rf = 0,27 (SiO₂, *n*-Hexan/Essigsäureethylester, 1:1); ¹H (400 MHz, Methanol-d4) δ 7.84 (m, 2H, H-1/5), δ 7.56 (m, 2H, H-2/4), δ 7.61 (m, 1H, H-3), δ 2.86 (m, 2H, H-7), δ 1.50 (m, 2H, H-8), δ 1.50 (m, 2H, H-9), δ 3.49 (m, 2H, H-10); ¹³C (100 MHz, Methanol-d4) δ 127.7 (C-1/5), δ 129.9 (C-2/4), δ 133.2 (C-3), δ 141.9 (C-6), δ 43.6 (C-7), δ 26.9 (C-8), δ 30.3 (C-9), δ 62.1 (C-10). HRESIMS *m*/*z* 228.0695 [M-H]⁻, berechnet für C₁₀H₁₄NO₃S⁻ m/z 228.0700).

### Synthesen:

### N-(4-hydroxybutyl)-benzolsulfonamid (1a, Schema 1)

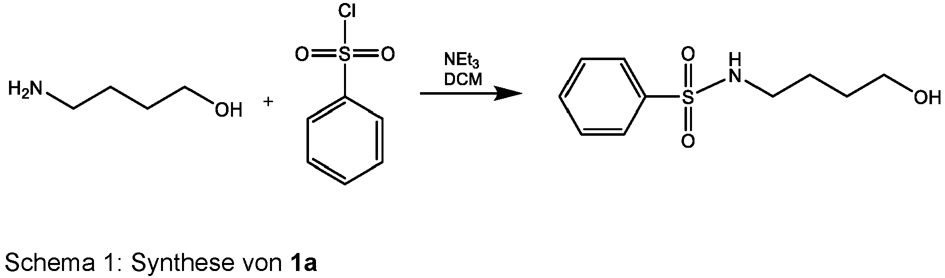

Die Synthese von **1a** wurde wie im Stand der Technik bekannt durchgeführt (Schema 1). 0,184 ml (2 mmol) 4-Amino-1-butanol werden in 10 ml trockenem Dichlormethan gelöst. Anschließend wird die Lösung auf 0 °C abgekühlt und unter Rühren werden 0.28 ml (2 mmol) trockenes Triethylamin, gefolgt von 0,256 ml Benzolsulfonylchlorid (2 mmol) zugegeben. Das Reaktionsgemisch wärmt sich auf Raumtemperatur und wird gerührt, bis die Edukte verbraucht sind. Der Reaktionsverlauf wird mittels Dünnschichtchromatographie auf Kieselgelfolien (Laufmittel: *n*-Hexan/Essigsäureethylester 1:1, v/v) verfolgt. Nach Reaktionsende wird bis zur Trockene am Rotationsverdampfer eingeengt, der erhaltene Rückstand in *n*-Hexan/Essigsäureethylester (1:1, v/v) unter Zugabe einiger Tropfen Methanol gelöst, und säulenchromatographisch an Kieselgel mittels eines Stufengradienten [*n-*Hexan/Essigsäureethylester (1:1, v/v) → Essigsäureethylester → Essigsäureethylester/Methanol (7:3, v/v)] gereinigt, um das Produkt als farbloses Öl (394 mg, 1,72 mmol, 86%) zu erhalten. Das Syntheseprodukt **1a** ist in allen spektroskopischen Daten mit Naturstoff **1** identisch.

### Analytische Daten (1a):

Rf =0,27 (SiO₂, *n*-Hexan/Essigsäureethylester, 1:1); ¹H (400 MHz, Methanol-da) δ 7,84 (m, 2H, H-1/5), δ 7,58 (m, 2H, H-2/4), δ 7,58 (m, 1H, H-3), δ 2,86 (m, 2H, H-7), δ 1,50 (m, 2H, H-8), δ 1,50 (m, 2H, H-9), δ 3,49 (m, 2H, H-10) ); ¹³C (100 MHz, Methanol-da) δ 127,9 (C-1/5), δ 130,2 (C-2/4), δ 133,5 (C-3), δ 141,9 (C-6), δ 43,9 (C-7), δ 27,1 (C-8), δ 30,6 (C-9), δ 62,3 (C-10); HRESIMS *m*/*z* 228,0695 [M-H]-, berechnet für C₁₀H₁₄NO₃S⁻ *m*/*z* 228,0700).

### Allgemeine Synthesevorschrift

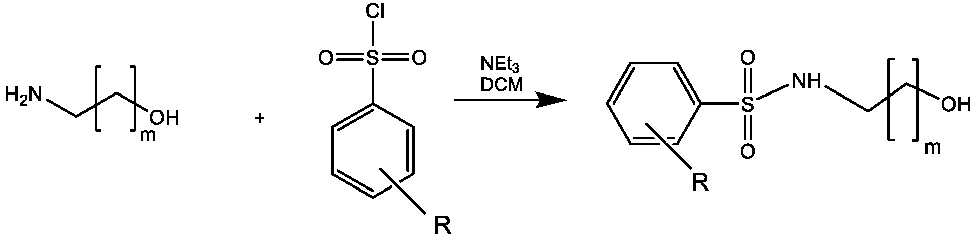

Zu einer Lösung des jeweiligen Aminoalkohols (1.5 Äquivalente) und trockenem Triethylamin (NEts, 2 Äquivalente) in trockenem Dichlormethan (DCM, 12 ml) wurde bei 22 °C langsam das entsprechende Sulfonylchlorid zugetropft. Rühren bei 22 °C wurde für 3 Stunden fortgesetzt, die flüchtigen Bestandteile wurden bei 30 °C unter vermindertem Druck am Rotationsverdampfer entfernt, und der Rückstand mittels Säulenchromatographie (Kieselgel, *n*-Hexan/Essigester-Gemische) gereinigt.

### 4-(tert-butyl)-N-(5-hydroxypentyl)benzolsulfonamid (Verbindung (2))

Gemäß der allgemeinen Synthesevorschrift wurde aus 4-(*tert*-butyl)-Benzolsulfonsäurechlorid (500 mg, 2,15 mmol) und 5-Aminopentanol (332 mg, 3,22 mmol), **2** (603 mg, 2,01 mmol, 93 %) als farbloser wachsartiger Festkörper erhalten.

Rf = 0,20 (SiO₂, *n*-Hexan/ Essigsäureethylester, 6:4); m.p. = 53 - 54°C; UV-Vis (MeOH): λₘₐₓ (log ε) = 228 nm (4,02); IR (ATR): v = 3286*m*, 2933*m*, 2863*w*, 1597*w*, 1473*w*, 1462*w*, 1424*m*, 1399*w*, 1362*w*, 1331*m*, 1318*s*, 1292*m*, 1268*w*, 1199*w*, 1158*s*, 1112*m*, 1088*m*, 1048*s*, 1016*w*, 887*m*, 843*m*, 826*m*, 755*m*, 735*w*, 689*m*, 638*m*, 630*s*, 573*vs*, 552*s*, 525*m*, 502*w* cm⁻¹; ¹H-NMR (500 MHz, DMSO-*d*₆): δ = 7,72 - 7,68 (*m*, 2H, 2-H, 2'-H), 7,62 - 7,58 (*m*, 2H, 3-H, 3'-H), 7,46 (*t*, *J* = 5,7 Hz, 1H, NH), 4,30 (*t*, *J* = 5,1 Hz, 1H, OH), 3,34 - 3,29 (*m*, 2H, 11-H), 2,73 - 2,68 (*m*, 2H, 7-H), 1,39 - 1,31 (*m*, 4H, 8-H, 10-H), 1,30 (*s*, 9H, 6-H, 6'-H, 6"-H), 1,26 - 1,15 (*m*, 2H, 9-H) ppm; ¹³C-NMR (101 MHz, DMSO-*d*₆): δ = 155,2 (C-4), 137,8 (C-1), 126,3 (C-2), 125,9 (C-3), 60,5 (C-11), 42,6 (C-7), 34,8 (C-5), 32,0 (C-10), 30,8 (C-6), 28,9 (C-8), 22,6 (C-9) ppm; MS (ESI, MeOH): *m*/*z* 322,4 (100 %, [M+Na]⁺); HRESIMS: *m*/*z* 322,14460; Analyse berechnet: C, 60,17; H, 8,42; N, 4,68; gefunden: C, 59,84; H, 8,67; N, 4,50.

### 4-(tert-butyl)-N-(2-hydroxyethyl)benzolsulfonamid (Verbindung (3))

Gemäß der allgemeinen Synthesevorschrift wurde aus 4-(*tert*-butyl)-Benzolsulfonsäurechlorid (500 mg, 2,15 mmol) und 2-Aminoethanol (197 mg, 3,22 mmol), **3** (435 mg, 1,69 mmol, 79 %) als farbloser wachsartiger Festkörper erhalten.

Rf = 0,20 (SiO₂, n-Hexan/ Essigsäureethylester, 6:4); m.p. = 75 - 77°C; UV-Vis (MeOH): λₘₐₓ (log ε) = 228 nm (4,10); IR (ATR): v = 3522*w*, 3162*w*, 3072*vw*, 2952*w*, 2903*w*, 2891*w*, 2868*w*, 1596*w*, 1463*w*, 1450*w*, 1432*w*, 1400*w*, 1364*w*, 1354*vw*, 1325*s*, 1308*m*, 1291*w*, 1261*w*, 1207*vw,* 1198*w*, 1161*vs*, 1115*m*, 1087*m*, 1071*m*, 1057*s*, 1016*w*, 955*m*, 905*w*, 844*w*, 831*vw,* 823*m,* 763*s*, 726*m*, 624*s*, 580*vs*, 550*s*, 515*vw,* 498*vw*, 473*w*, 457*w*, 421*w,* 411*w* cm⁻¹; ¹H-NMR (400 MHz, DMSO-*d*₆): δ = 7,75 - 7,70 (*m*, 2H, 2-H, 2'-H), 7,63 - 7,58 (*m*, 2H, 3-H, 3'-H), 7,50 (*s*, 1H, NH), 4,66 (*t, J* = 5,5 Hz, 1H, OH), 3,37 (*q*, *J* = 6,0 Hz, 2H, 8-H), 2,77 (*t, J* = 6,4 Hz, 2H, 7-H), 1,30 (*s*, 9H, 6-H, 6'-H, 6"-H) ppm; ¹³C-NMR (101 MHz, DMSO-*d*₆): δ = 155,2 (C-4), 137,7 (C-1), 126,4 (C-2), 125,9 (C-3), 59,9 (C-8), 45,1 (C-7), 34,8 (C-5), 30,8 (C-6) ppm; MS (ESI, MeOH): *m*/*z* 280,4 (100 %, [M+Na]⁺);HRESIMS: *m*/*z* 280,09753; Analyse berechnet: C, 56,01; H, 7,44; N, 5,44; gefunden: C, 55,83; H, 7,69; N, 5,25.

### 4-(tert-butyl)-N-(3-hydroxypentyl)benzolsulfonamid (Verbindung (4))

Gemäß der allgemeinen Synthesevorschrift wurde aus 4-(*tert*-butyl)-Benzolsulfonsäurechlorid (500 mg, 2,15 mmol) und 3-Aminopropanol (242 mg, 3,22 mmol), **4** (530 mg, 1,95 mmol, 91 %) als farbloser wachsartiger Festkörper erhalten.

Rf = 0,20 (SiO₂, *n*-Hexan/ Essigsäureethylester, 6:4); m.p. = 63 - 65°C; UV-Vis (MeOH): λₘₐₓ(log ε) = 228 nm (4,15); IR (ATR): v = 3311*m*, 3241*m*, 2963*m*, 2870*w*, 1597*w*, 1472*w*, 1426*m*, 1402*m*, 1363*w*, 1334*m*, 1313*s*, 1292*m*, 1270*w*, 1203*w*, 1160*vs*, 1112*m*, 1088*m*, 1069*m*, 1027*m*, 1008*m*, 960*m*, 908*w*, 847*w*, 834*m*, 826*m*, 756*s*, 704*m*, 625*s*, 578*vs*, 550*s*, 512*m*, 487*m*, 475*w*, 461*w* cm⁻¹; ¹H-NMR (400 MHz, DMSO-*d*₆): δ = 7,73 - 7,68 (*m*, 2H, 2-H, 2'-H), 7,63 - 7,58 (*m*, 2H, 3-H, 3'-H), 7,43 (*s*, 1H, NH), 4,40 (s, 1H, OH), 3,37 (*td, J* = 6,2, 2,8 Hz, 2H, 9-H), 2,77 (*t, J* = 7,3 Hz, 2H, 7-H), 1,58 - 1,49 (*m*, 2H, 8-H), 1,30 (*s*, 9H, 6-H, 6'-H, 6"-H) ppm; ¹³C-NMR (101 MHz, DMSO-*d*₆): δ = 155,2 (C-4), 137,6 (C-1), 126,4 (C-2), 126,0 (C-3), 58,1 (C-9), 40,0 (C-7), 34,8 (C-5), 32,4 (C-8), 30,8 (C-6) ppm; MS (ESI, MeOH): *m*/*z* 294,1 (100 %, [M+Na]⁺); HRESIMS: *m*/*z* 294,11316; Analyse berechnet: C, 57,54; H, 7,80; N, 5,16; gefunden: C, 57,21; H, 8.03; N, 5.96.

### 4-(tert-butyl)-N-(4-hydroxybutyl)benzolsulfonamid (Verbindung (5))

Gemäß der allgemeinen Synthesevorschrift wurde aus 4-(*tert*-butyl)-Benzolsulfonsäurechlorid (500 mg, 2,15 mmol) und 4-Aminobutanol (287 mg, 3,22 mmol), **5** (518 mg, 1,81 mmol, 84 %) als farbloser wachsartiger Festkörper erhalten.

Rf = 0,20 (SiO₂, *n*-Hexan/ Essigsäureethylester, 6:4); m.p. = 58 - 60°C; UV-Vis (MeOH): λₘₐₓ (log ε) = 228 nm (4,15); IR (ATR): v = 3452*w*, 3248*w*, 3115*w*, 2962*w*, 2944*m*, 2867*w*, 1594*w*, 1471*w*, 1463*w*, 1435*w*, 1400*w*, 1364*w*, 1316*s*, 1291*m*, 1267*w*, 1197*w*, 1154*s*, 1111*m*, 1084*m*, 1065*m*, 1038*m*, 1018*w*, 988*w*, 909*w*, 839*m*, 753*m*, 735*w*, 685*w*, 627*s*, 581*vs,* 549*s*, 514*w*, 489*w*, 472*w*, 464*w* cm⁻¹; ¹H-NMR (400 MHz, DMSO-*d*₆): δ = 7,73 - 7,68 (*m*, 2H, 2-H, 2'-H), 7,62 - 7,58 (*m*, 2H, 3-H, 3'-H), 7,47 (*s*, 1H, NH), 4,35 (*s*, 1H, OH), 3,35 - 3,29 (*m*, 2H, 10-H), 2,75 - 2,69 (*m*, 2H, 7-H), 1,44 - 1,33 (*m*, 4H, 8-H, 9-H), 1,30 (*s*, 9H, 6-H, 6'-H, 6"-H) ppm; ¹³C-NMR (101 MHz, DMSO-*d*₆): δ = 155,1 (C-4), 137,8 (C-1), 126,3 (C-2), 125,9 (C-3), 60,2 (C-10), 42,5 (C-7), 34,8 (C-5), 30,8 (C-6), 29,5 (C-9), 25,8 (C-8) ppm; MS (ESI, MeOH): *m*/*z* 308,3 (100 %, [M+Na]⁺); HRESIMS: *m*/*z* 308,12892; Analyse berechnet: C, 58,92; H, 8,12; N, 4,91; gefunden: C, 58,77; H 8,41; N, 4,67.

### N-(6-hydroxyhexyl)-4-methylbenzolsulfonamid (Verbindung (6))

Gemäß der allgemeinen Synthesevorschrift wurde aus 4-Methylbenzolsulfonsäurechlorid (500 mg, 2,62 mmol) und 6-Aminohexanol (461 mg, 3,93 mmol), **6** (551 mg, 2,03 mmol, 77 %) als farbloser wachsartiger Festkörper erhalten.

Rf = 0,15 (SiO₂, *n*-Hexan/ Essigsäureethylester, 6:4); m.p. = 49 -50°C; UV-Vis (MeOH): λₘₐₓ (log ε) = 227 nm (4,10); IR (ATR): v = 3423*w*, 3364*w*, 3290*m*, 2936*m*, 2891*w*, 2860*w*, 1589*w*, 1495*w*, 1476*w*, 1422*m*, 1385*w*, 1319*m*, 1303*w*, 1290*w*, 1154*vs*, 1091*m*, 1067*m*, 1036*m*, 983*w*, 905*m*, 817*s*, 734*w*, 707*w*, 666*s*, 573*s*, 549*s*, 523*m*, 484*w*, 430*w* cm⁻¹; ¹H-NMR (400 MHz, DMSO-*d*₆): δ = 7,70 - 7,63 (*m*, 2H, 2-H, 2'-H), 7,47 - 7,41 (*m*, 1H, NH), 7,41 - 7,35 (*m*, 2H, 3-H, 3'-H), 4,30 (*t*, *J* = 5,1 Hz, 1H, OH), 3,38 - 3,30 (*m*, 2H, 11-H), 2,73 - 2,65 (*m*, 2H, 6-H), 2,37 (*s*, 3H, 5-H), 1,41 - 1,27 (*m*, 4H, 7-H, 10-H), 1,22 - 1,14 (*m*, 4H, 8-H, 9-H) ppm; ¹³C-NMR (101 MHz, DMSO-*d*₆): δ = 142,4 (C-4), 137,8 (C-1), 129,6 (C-3, C-3'), 126,5 (C-2, C-2'), 60,6 (C-11), 42,5 (C-6), 32,4 (C-10), 29,0 (C-7), 25,9 (C-9), 25,0 (C-8), 20,9 (C-5) ppm; MS (ESI, MeOH): *m*/*z* 294 (100 %, [M+Na]⁺); HRESIMS: *m*/*z* 294,11332; Analyse berechnet: C, 57,54; H, 7,80; N, 5,16; gefunden: C, 57,36; H, 8,01; N, 5,03.

### 3-(tert-butyl)-N-(2-hydroxyethyl)benzolsulfonamid (Verbindung (7))

Gemäß der allgemeinen Synthesevorschrift wurde aus 3-(*tert*-butyl)-Benzolsulfonsäurechlorid (500 mg, 2,15 mmol) und 2-Aminoethanol (197 mg, 3,22 mg), **7** (522 mg, 2,03 mmol, 94 %) als farbloses Öl erhalten. Rf = 0,20 (SiO₂, *n-*Hexan/ Essigsäureethylester, 6:4); UV-Vis (MeOH): λₘₐₓ (log ε) = 224 nm (4,04); IR (ATR): v = 3500*w*, 3276*w*, 2962*w*, 2872*w*, 1481*m*, 1460*w*, 1416*m*, 1398*w*, 1366*w*, 1325*m*, 1307*s*, 1267*w*, 1205*vw*, 1156*vs*, 1125*m*, 1096*m*, 1057*m*, 998*vw*, 949*m*, 896*w*, 865*w*, 796*m*, 775*w*, 696*s*, 678*m*, 625*m*, 586*vs*, 545*m*, 534*m*, 524*m*, 481*w*, 456w cm⁻¹; ¹H-NMR (400 MHz, DMSO-*d*₆): δ = 7,82 - 7,80 (*m*, 1H, 2-H), 7,67 (*ddd, J* = 7,8, 2,0, 1,1 Hz, 1H, 6-H), 7,62 (*ddd, J* = 7,8, 1,8, 1,1 Hz, 1H, 4-H), 7,58 (*s*, 1, NH), 7,51 (*td, J* = 7,8, 0,5 Hz, 1H, 5-H), 4,67 (*t, J* = 5,5 Hz, 1H, OH), 3,37 (*q*, *J* = 6,1 Hz, 2H, 10-H), 2,79 (*t*, *J* = 6,4 Hz, 2H, 9-H), 1,31 (*s*, 9H, 8-H, 8'-H, 8"-H) ppm; ¹³C-NMR (101 MHz, DMSO-*d*₆): δ = 151,9 (C-3), 140,4 (C-1), 129,3 (C-4), 128,9 (C-5), 123,7 (C-2), 122,9 (C-6), 59,9 (C-10), 45,1 (C-9), 34,7 (C-7), 30,9 (C-8) ppm; MS (ESI, MeOH): *m*/*z* 280,3 (100 %, [M+Na]⁺); HRESIMS: *m*/*z* 280,11005; Analyse berechnet: C, 56,01; H, 7,44; N, 5,44; gefunden: C, 55,86; H, 7,70; N, 5,24.

### 3-(tert-butyl)-N-(3-hydroxypropyl)benzolsulfonamid (Verbindung (8))

Gemäß der allgemeinen Synthesevorschrift wurde aus 3-(*tert*-butyl)-Benzolsulfonsäurechlorid (500 mg, 2,15 mmol) und 3-Aminopropanol (242 mg, 3,22 mg), **8** (572 mg, 2,11 mmol, 98 %) als farbloses Öl erhalten. Rf = 0,23 (SiO₂, *n-*Hexan/ Essigsäureethylester, 6:4); UV-Vis (MeOH): λₘₐₓ (log ε) = 224 nm (4,15); IR (ATR): v = 3501*w*, 3276*w*, 2961*m*, 2873*w*, 1481*m*, 1460*w*, 1416*w*, 1398*w*, 1366*w*, 1324*m*, 1307*s*, 1267*w*, 1178*w*, 1155*vs*, 1125*m*, 1084*m*, 1069*m*, 1008*w*, 998*w*, 960*w*, 876*w*, 798*m*, 774*m*, 696*s*, 678*m*, 625*m*, 586*vs*, 534*m*, 491*m*, 460*w* cm⁻¹; ¹H-NMR (400 MHz, DMSO-*d*₆): δ = 7,79 (*td, J* = 1,9, 0,5 Hz, 1H, 2-H), 7,67 (*ddd, J* = 7,8, 2,0, 1,1 Hz, 1H, 6-H), 7,61 (*ddd, J* = 7,7, 1,8, 1,2 Hz, 1H, 4-H), 7,52 (*td, J* = 7,5, 1,8 Hz, 2H, 5-H, NH), 4,39 (*t, J* = 5,1 Hz, 1H, OH), 3,36 (*td, J* = 6,2, 4,5 Hz, 2H, 11-H), 2,79 (*td, J* = 7,5, 3,6 Hz, 2H, 9-H), 1,55 - 1,46 (*m*, 2H, 10-H), 1,31 (*s*, 9H, 8-H, 8'-H, 8"-H) ppm; ¹³C-NMR (101 MHz, DMSO-*d*₆): δ = 151,9 (C-3), 140,3 (C-1), 129,3 (C-4), 128,9 (C-5), 123,7 (C-2), 122,9 (C-6), 58,0 (C-11), 40,0 (C-9), 34,7 (C-7), 32,3 (C-10), 30,9 (C-8) ppm; MS (ESI, MeOH): *m*/*z* 294,1 (100 %, [M+Na]⁺); HRESIMS: *m*/*z* 294,11321; Analyse berechnet: C, 57,54; H, 7,80; N, 5,16; gefunden: C, 57,25; H, 8,03; N, 4,99.

### 3-(tert-butyl)-N-(4-hydroxybutyl)benzolsulfonamid (Verbindung (9))

Gemäß der allgemeinen Synthesevorschrift wurde aus 3-(*tert*-butyl)-Benzolsulfonsäurechlorid (500 mg, 2,15 mmol) und 4-Aminobutanol (287 mg, 3,22 mmol), **9** (589 mg, 2,06 mmol, 96 %) als farbloses Öl erhalten. Rf = 0,20 (SiO₂, n-Hexan/ Essigsäureethylester, 6:4); UV-Vis (MeOH): λₘₐₓ (log ε) = 224 nm (3,90); IR (ATR): v = 3499*w*, 3280*w*, 2959*m*, 2870*w*, 1481*m*, 1460*w*, 1416*w*, 1398*w*, 1366*w*, 1324*m*, 1307*m*, 1267*w*, 1156*vs*, 1125*m*, 1088*m*, 1056*m*, 1034*w*, 998*w*, 872*w*, 797*m*, 773*w*, 696*s*, 678*m*, 626*m*, 586*vs*, 535*m*, 520*m*, 496*w*, 464*w* cm⁻¹; ¹H-NMR (400 MHz, DMSO-*d*₆): δ = 7,81 - 7,78 (*m,* 1H, 2-H), 7,66 (*ddd, J* = 7,8, 2,0, 1,1 Hz, 1H, 6-H), 7,61 (*ddd, J* = 7,8, 1,8, 1,1 Hz, 1H, 4-H), 7,56 - 7,48 (*m,* 2H, 5-H, NH), 4,35 (*s*, 1H, OH), 3,37 - 3,27 (*m,* 2H, 12-H), 2,77 - 2,70 (*m,* 2H, 9-H), 1,43 - 1,32 (*m,* 4H, 10-H, 11-H), 1,31 (*s*, 9H, 8-H, 8'-H, 8"-H) ppm; ¹³C-NMR (101 MHz, DMSO-*d*₆): δ = 151,9 (C-3), 140,5 (C-1), 129,2 (C-4), 128,9 (C-5), 123,7 (C-2), 122,9 (C-6), 60,2 (C-12), 42,5 (C-9), 34,7 (C-7), 30,9 (C-8), 29,5 (C-11), 25,7 (C-10) ppm; MS (ESI, MeOH): *m*/*z* 308,4 (100 %, [M+Na]⁺); HRESIMS: m/z 308,12899; Analyse berechnet: C, 58,92; H, 8,12; N, 4,91; gefunden: C, 58,73; H, 8,33; N, 4,77.

### 3-(tert-butyl)-N-(5-hydroxypentyl)benzolsulfonamid (Verbindung (10))

Gemäß der allgemeinen Synthesevorschrift wurde aus 3-(*tert*-butyl)-Benzolsulfonsäurechlorid (500 mg, 2,15 mmol) und 5-Aminopentanol (332 mg, 3,22 mmol), **10** (610 mg, 2,04 mmol, 95 %) als farbloses Öl erhalten. Rf = 0,23 (SiO₂, n-Hexan/ Essigsäureethylester, 6:4); UV-Vis (MeOH): λₘₐₓ (log ε) = 224 nm (3,90); IR (ATR): v = 3503*w*, 3278*w*, 2939*m*, 2868*w*, 1481*m*, 1459*w*, 1416*w*, 1398*w*, 1366*w*, 1325*m*, 1307*m*, 1267*w*, 1156*vs*, 1125*m*, 1087*m*, 1040*m*, 998*w*, 898*w*, 797*w*, 774*w*, 697*s*, 678*m*, 626*m*, 586*vs*, 534*m*, 501*w*, 478*w*, 461*w* cm⁻¹; ¹H-NMR (400 MHz, DMSO-*d*₆): δ = 7,79 (*td, J* = 1,9, 0,5 Hz, 1H, 2-H), 7,66 (*ddd, J* = 7,8, 2,0, 1,1 Hz, 1H, 6-H), 7,61 (*ddd, J* = 7,7, 1,8, 1,2 Hz, 1H, 4-H), 7,55 - 7,48 (*m*, 2H, 5-H, NH), 4,30 (*t, J* = 5,1 Hz, 1H, OH), 3,35 - 3,27 (*m*, 2H, 13-H), 2,72 (*q*, *J* = 6,2 Hz, 2H, 9-H), 1,38 - 1,31 (*m*, 4H, 10-H, 12-H), 1,31 (*s*, 9H, 8-H, 8'-H, 8"-H), 1,26 - 1,17 (*m*, 2H, 11-H) ppm; ¹³C-NMR (126 MHz, DMSO-*d*₆): δ = 151,9 (C-3), 140,5 (C-1), 129,2 (C-4), 128,9 (C-5), 123,7 (C-2), 122,8 (C-6), 60,5 (C-13), 42,6 (C-9), 34,7 (C-7), 32,0 (C-12), 30,9 (C-8), 28,8 (C-10), 22,6 (C-11) ppm; MS (ESI, MeOH): *m*/*z* 322,3 (100 %, [M+Na]⁺); HRESIMS: *m*/*z* 322,14472; Analyse berechnet: C, 60,17; H, 8,42; N, 4,68; gefunden: C, 59,76; H, 8,69; N, 15,81.

### 4-Cyclohexyl-N-(2-hydroxyethyl)benzensulfonamid (Verbindung (11))

Gemäß der allgemeinen Synthesevorschrift wurde aus 4-Cyclohexylbenzen-1-sulfonsäurechlorid (500 mg, 1.93 mmol) und 2-Aminoethanol (177 mg, 2.90 mmol), **11** (453 mg, 83 %) als farblose, hochviskose Flüssigkeit erhalten. Rf = 0.56 (SiO₂, Chloroform/ Essigsäureethylester, 4:6); UV-Vis (MeOH): λₘₐₓ (log ε) = 229 nm (4.19); IR (ATR): v = 3514*vw*, 3264*w*, 3146*w*, 2920*m*, 2848*m*, 1597*w*, 1496*vw*, 1483*vw*, 1461*w*, 1451*m*, 1427*w*, 1409*w*, 1348*w*, 1319*s*, 1278*w*, 1260*w*, 1216*vw,* 1188*w*, 1156*s*, 1134*w*, 1093*s*, 1059*m*, 1036*m*, 1018*w*, 996*w*, 953*m*, 890*w*, 864*vw*, 842*w*, 826*s*, 802*w*, 782*vw,* 731*w*, 701*s*, 631*w*, 597*s*, 574*vs*, 527*m*, 504*w*, 491*w*, 479*w*, 458*m* cm⁻¹; ¹H-NMR (400 MHz, DMSO-*d*₆): δ = 7.72 - 7.68 (*m,* 2H, 2-H, 2'-H), 7.51 - 7.46 (*m,* 1H, NH), 7.45 - 7.40 (*m,* 2H, 3-H, 3'-H), 4.66 (*t, J* = 5.6 Hz, 1H, OH), 3.37 (*td, J* = 6.3, 5.5 Hz, 2H, 10-H), 2.81 - 2.74 (*m*, 2H, 9-H), 2.64 - 2.55 (*m,* 1H, 5-H), 1.84 - 1.74 (*m,* 4H, 6-Hₐ, 6'-Hₐ, 7-Hₐ, 7'-Hₐ), 1.74 - 1.66 (*m,* 1H, 8-Hₐ), 1.50 - 1.30 (*m*, 4H, 6-H_{b}, 6'-H_{b}, 7-H_{b}, 7'-H_{b}), 1.30 - 1.17 (*m*, 1H, 8-H_{b}) ppm; ¹³C-NMR (101 MHz, DMSO-*d*₆): δ = 152.1 (C-4), 138.0 (C-1), 127.4 (C-2), 126.6 (C-3), 59.9 (C-10), 45.1 (C-9), 43.6 (C-5), 33.5 (C-6), 26.2 (C-7), 25.4 (C-8) ppm; MS (ESI, MeOH): *m*/*z* 305.9 (90 %, [*M*+*Na*]⁺); HRESIMS: *m*/*z* 306.11403; Analyse berechnet: C, 59.34; H, 7.47; N, 4.94; gefunden: C, 59.07; H, 7.73; N 4.69.

## Patentansprüche

1. Verwendung einer Verbindung nach Formel (I) oder eines Salzes davon als Herbizid: 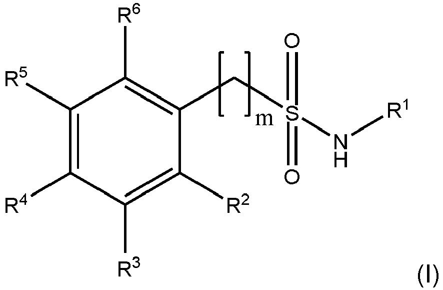 wobei
R¹ ausgewählt ist aus der Gruppe, bestehend aus
(i) einem unsubstituierten oder substituierten (C₂-C₁₂)-Alkylalkohol,
(ii) einem unsubstituierten oder substituierten (C₂-C₁₂)-Alkenylalkohol, und
(iii) einem unsubstituierten oder substituierten (C₂-C₁₂)-Alkinylalkohol;
R², R³, R⁴, R⁵ und R⁶ jeweils unabhängig voneinander ausgewählt sind aus der Gruppe, bestehend aus Wasserstoff (H), Halogen (F, Cl, Br, I), Hydroxyl (OH), einem linearen oder verzweigten (C₁-C₆)-Alkyl, einem linearen oder verzweigten O-(C₁-C₆)-Alkyl, einem (C₃-C₆)-Cycloalkyl, und einem (Cs-Cs)-Cycloalkoxy; und
m 0, 1, 2, 3, 4, 5, 6, 7, 8, 9 oder 10 ist.

2. Verwendung nach Anspruch 1, wobei R¹ ausgewählt ist aus der Gruppe, bestehend aus
(i) einem unsubstituierten oder substituierten (C₂-C₈)-Alkylalkohol,
(ii) einem unsubstituierten oder substituierten (C₂-C₈)-Alkenylalkohol, und
(iii) einem unsubstituierten oder substituierten (C₂-C₈)-Alkinylalkohol.

3. Verwendung nach Anspruch 1 oder Anspruch 2, wobei R¹ ein unsubstituierter (C₂-C₈)-Alkylalkohol ist.

4. Verwendung nach einem der Ansprüche 1 bis 3, wobei R², R³, R⁴, R⁵ und R⁶ jeweils unabhängig voneinander ausgewählt sind aus der Gruppe, bestehend aus Wasserstoff (H), Halogen (F, Cl, Br, I), einem linearen oder verzweigten (C₁-C₄)-Alkyl, Hydroxyl (OH), einem linearen oder verzweigten O-(C₁-C₄)-Alkyl.

5. Verwendung nach einem der Ansprüche 1 bis 4, wobei eine der Gruppen R², R³, R⁴, R⁵ und R⁶ *tert*-Butyl ist, die übrigen der Gruppen R², R³, R⁴, R⁵ und R⁶ jeweils H sind, m 0 ist, und R¹ ein unsubstituierter (C₅-C₇)-Alkylalkohol ist.

6. Verwendung nach einem der Ansprüche 1 bis 4, wobei eine der Gruppen R², R³, R⁴, R⁵ und R⁶ Cyclohexyl ist, die übrigen der Gruppen R², R³, R⁴, R⁵ und R⁶ jeweils H sind, m 0 ist, und R¹ ein unsubstituierter (C₂-C₄)-Alkylalkohol ist.

7. Verwendung nach einem der Ansprüche 1 bis 4, wobei m 0 ist.

8. Verwendung nach Anspruch 1, wobei die Verbindung nach Formel (I) ausgewählt ist aus der Gruppe bestehend aus den Verbindungen (**2**), (**10**) und (**1a**):

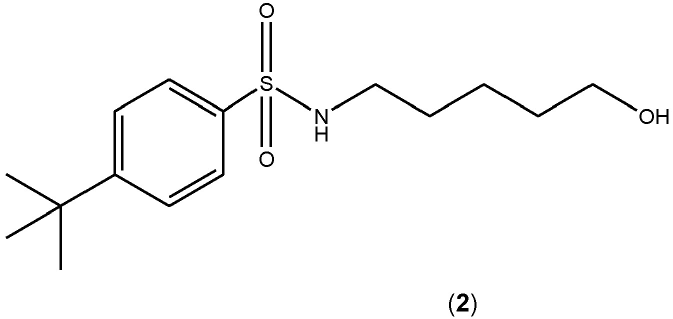

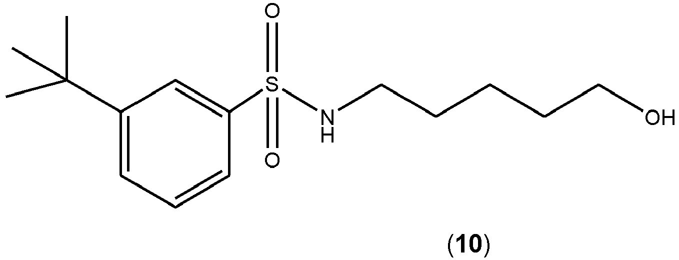

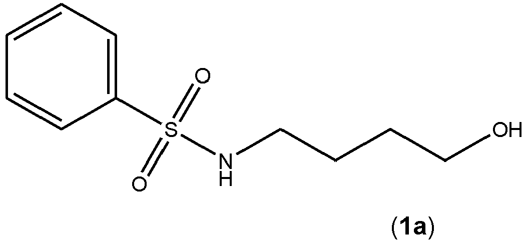

9. Verwendung nach Anspruch 1, wobei die Verbindung nach Formel (I) ausgewählt ist aus der Gruppe bestehend aus 4-(*tert*-Butyl)-*N*-(2-hydroxyethyl)benzolsulfonamid (Verbindung (**3**)), 4-(*tert*-Butyl)-*N*-(3-hydroxypentyl)benzolsulfonamid (Verbindung (**4**)), 4-(tert-Butyl)-*N*-(4-hydroxybutyl)benzolsulfonamid (Verbindung (**5**)), *N*-(6-Hydroxyhexyl)-4-methylbenzolsulfonamid (Verbindung (**6**)), 3-(*tert*-Butyl)-*N*-(2-hydroxyethyl)benzolsulfonamid (Verbindung (**7**)), 3-(*tert*-Butyl)-*N*-(3-hydroxypropyl)benzolsulfonamid (Verbindung (**8**)), 3-(*tert*-Butyl)-*N*-(4-hydroxybutyl)benzolsulfonamid (Verbindung (**9**)), und 4-Cyclohexyl-N-(2-hydroxyethyl)benzensulfonamid (Verbindung (**11**)).

10. Verfahren zur Bekämpfung eines Unkrauts oder mehrerer Unkräuter, umfassend das Aufbringen einer wirksamen Menge einer Verbindung nach Formel (I) oder eines Salzes davon, wie in einem der Ansprüche 1 bis 9 definiert, auf eine Pflanze oder Teile einer Pflanze.

11. Verfahren nach Anspruch 10, wobei das Verfahren präventiv oder kurativ angewendet wird.

12. Verfahren nach Anspruch 10 oder Anspruch 11, wobei die Verbindung nach Formel (I) oder das Salz davon in einer wässrigen Lösung vorliegt, wobei die Konzentration der Verbindung nach Formel (I) oder des Salzes davon in der wässrigen Lösung im Bereich von 1 µM bis 10 mM liegt.

13. Verfahren nach einem der Ansprüche 10 bis 12, wobei die Verbindung nach Formel (I) oder das Salz davon in Form eines Trägerzusammensetzungsgemisches vorliegt, wobei die Verbindung nach Formel (I) oder das Salz davon in einer Menge von 0,001 bis 99 Gew.-%, bezogen auf das Trägerzusammensetzungsgemisch, vorliegt.

14. Verfahren nach Anspruch 13, wobei das Trägerzusammensetzungsgemisch einen oder mehrere dispergierbare, inerte Träger umfasst.

15. Verfahren nach einem der Ansprüche 10 bis 14, wobei die Verbindung nach Formel (I) oder das Salz davon als hydraulisches Spray hoher Flüssigkeitsmengen, als hydraulisches Spray niedriger Flüssigkeitsmengen, als Ultraniedrigvolumenspray, durch Hochdruckflüssigkeitsinjektion, durch Spaltinjektion, als Gebläseluftspray, als Luftspray, oder als Staub aufgebracht wird.
